# EUROPÄISCHE PATENTSCHRIFT

(11) **EP 0 480 191 B1**
(45) Veröffentlichungstag und Bekanntmachung des Hinweises auf die Patenterteilung: **04.01.1995**
(21) Anmeldenummer: 91115440.9
(22) Anmeldetag: 12.09.1991
(51) Int. Cl.: B23B 5/16

(54) **Vorrichtung zum Bearbeiten von Stangen**
Equipment for machining bars
Equipement pour l'usinage de barres

(30) Priorität: 08.10.1990 DE 4031911
(43) Veröffentlichungstag der Anmeldung: 15.04.1992
(73) Patentinhaber: Thyssen Nordseewerke GmbH, 26725 Emden (DE)
(72) Erfinder: Munk, Joachim, W-7234 Aichhalden (DE)
(74) Vertreter: Weiss, Peter, Dr. rer.nat.

(56) Entgegenhaltungen:
- EP-A- 239 564
- CH-A- 561 576
- DE-A- 2 448 545
- DE-C- 625 218
- FR-A- 822 103
- FR-A- 1 241 925
- US-A- 3 182 816
- US-A- 3 691 879
- US-A- 4 425 062

## Beschreibung

Die Erfindung betrifft eine Vorrichtung zum Bearbeiten von beiden Stangenenden einer Stange mittels einer Sägeeinheit sowie zwei jeweils einem Ende der Stange zugeordneten Bearbeitungseinrichtungen die auf jeweils einem Schlitten angeordnet und in Richtung auf die Enden der Stange zu verfahrbar sind.

In vielen Anwendungsfällen muß Stangenmaterial, wozu nicht nur Rund-, sondern auch Mehrkantstangen zählen, bearbeitet werden. Beispielsweise ist es notwendig, Stangenmaterial auf vorbestimmte Längen abzulängen. Besonders problematisch ist allerdings das Endenbearbeiten von Stangen. Hierzu gehört vor allem das Planen, Innen- und Außenfasen, Ausdrehen, Formbohren, Radiusdrehen, Überdrehen, Anspitzen, Planstechen, Kuppen usw.. Alle diese Bearbeitungsvorgänge erfordern eine Bearbeitungsein-richtung, welche meist aus einem Bohrständer od. dgl. besteht.

Die Stange wird dann in einen Spannstock eingespannt und die Bearbeitung des Stangenendes von Hand mittels dem Bohrständer vorgenommen.

Eine andere Möglichkeit des Bearbeitens von Stangenenden besteht in einem entsprechenden Ausdrehen in einer Drehbank od. dgl.. Dies zeigt, daß das Bearbeiten von Stangenenden sehr arbeitsintensiv, wenig automatisiert und deshalb sehr kostspielig ist.

Eine Vorrichtung zum Bearbeiten von beiden Stangenenden ist beispielsweise aus der US-A 4 425 062 bekannt. Dort wird eine Stange über eine Zuführeinrichtung zwischen zwei Bearbeitungseinrichtungen eingelegt und dann in jeder Bearbeitungseinrichtung das Stangenende geschnitten und bearbeitet. Dies hätte den Nachteil, daß zwischen den Bearbeitungsstationen kein genaues Ablängen und Positionieren des Stangenabschnittes stattfinden kann. Dementsprechend muß jede Bearbeitungseinrichtung laufend die Lage des Stangenendes ermitteln, das von ihr bearbeitet werden soll.

Der Erfinder hat sich zum Ziel gesetzt, eine Vorrichtung der o.g. Art zu entwickeln, mittels der eine Bearbeitung von Stangenenden automatisch, kostengünstiger und insbesondere auch wesentlich präziser vorgenommen werden kann.

Zur Lösung dieser Aufgabe führt, daß der Sägeeinheit eine Indexiereinheit zum Bestimmen der Länge eines Stangenabschnittes nachgeordnet und dieser von zumindest einem Spannstock zwischen Sägeeinheit und Indexiereinheit gehalten ist, wobei dem Stangenabschnitt zumindest ein Greifer zum Entnehmen des Stangenabschnittes aus dem Spannstock und zum Übergeben des Stangenabschnittes in zumindest einen weiteren Spannstock und diesem wiederum die Bearbeitungseinrichtungen zugeordnet sind.

Bei der vorliegenden Erfindung erfolgt die beidseitige Bearbeitung eines Stangenabschnittes getrennt von einem Ablängen. Dabei befindet sich in der Ablängstation die Indexiereinheit, welche auf Führungsstangen verschiebbar ist. Dieser Indexiereinheit ist dann ein Spannstock zugeordnet, der sich gleichfalls wiederum an den gleichen Führungsstangen befindet, so daß auch er in seiner Lage verändert werden kann.

In der Ablängstation befindet sich ferner die Sägeeinheit. Mittels dieser Sägeeinheit kann ein Stangenende glatt abgeschnitten werden, so daß auch hier eine genauere Bearbeitung erfolgt. Erfindungsgemäß ist im vorliegenden Fall die Sägeeinheit mit einer Hubeinrichtung verbunden, welche die Sägeeinheit etwa senkrecht nach unten bewegt. Damit wirken die Kräfte beim Sägen nahezu senkrecht auf das Stangenmaterial ein, so daß der Schnitt sauberer und ratterarmer erfolgt. Die Hubeinrichtungen und der Spannstock werden voraussichtlich hydraulisch betrieben, während die Sägeeinheit und die Bearbeitungseinrichtung mit Servomotoren arbeiten.

In der getrennten Bearbeitungsstation erfolgt dann die Bearbeitung des Stangenabschnittes von beiden Enden her, wobei zwei in der Regel identische oder ähnlich ausgestaltete Bearbeitungseinrichtungen vorgesehen werden.

Bei der Bearbeitung von beiden Enden her werden die Stangen bzw. Stangenabschnitte in Spannstöcken gehalten. In der eben genannten separaten Bearbeitungsstation sind zwei solche Spannstöcke vorgesehen. Um unterschiedlichen Längen von Stangenabschnitten Rechnung tragen zu können, sollten diese Spannstöcke zueinander verschiebbar ausgebildet sein. Der Einfachheit halber sind sie zu diesem Zweck auf entsprechenden parallel angeordneten Führungssäulen angeordnet, denen entlang sie verschoben werden können.

Bei dieser Ausgestaltung bietet es sich an, die Bearbeitungseinrichtung ebenfalls auf diesen Führungssäulen anzuordnen, so daß zusätzliche Elemente und auch Platz eingespart werden. Von der Erfindung soll aber auch die getrennte Anordnung umfaßt sein.

Da sich die Endenbearbeitungsstation neben der Ablängstation befindet, müssen die abgelängten Stangenabschnitte von der Ablängstation zu der Endenbarbeitungsstation übergeführt werden. Dies geschieht bevorzugt durch automatisch betätigbare Greifer, welche zwischen beiden Stationen angeordnet sind. Der Einfachheit halber drehen diese Greifer nach Erfassen des Stangenabshcnittes um eine Achse und legen dann die Stangenabschnitte in die Spannstöcke.

Die Bearbeitungseinrichtungen sitzen einem Schlitten auf, der bevorzugt als Kreuzschlitten ausgebildet ist und die Bearbeitungseinrichtungen auch in einer Richtung senkrecht zur Vorschubrichtung des Schlittens fährt. Letztendlich ist auch daran gedacht, die Bearbeitungseinrichtungen anzuheben, wobei damit eine dreidimensionale Verstellung der Bearbeitungseinrichtungen und eine allseitige Bearbeitung eines Stangenabschnittes möglich ist. Beispielsweise können hierdurch in die Stangenabschnitte auch Querbohrungen eingebracht werden.

Bevorzugt sollen dann auf jedem Schlitten mehrere Bearbeitungseinrichtungen angeordnet sein, wobei auch mehrere Bearbeitungsmöglichkeiten in Kombination bestehen, ohne daß ein Werkzeugwechsel stattfinden muß. Dies ist durch den erfindungsgemäßen Kreuzschlitten auf einfache Weise gelöst.

In einem besonders bevorzugten Ausführungsbeispiel der Erfindung befinden sich Schlitten, Bearbeitungseinrichtungen sowie Spannstöcke und Sägeeinheiten in einem geschlossenen Gehäuse und sind automatisch von einem Steuerpult aus bedienbar. Der gesamte Arbeitsraum ist dann durch eine elektrisch gesicherte Kabine abgedeckt, beleuchtet und durch ein großes Fenster gut einsehbar. Eine elektronische Steuerung mit hoher Flexibilität und einfacher Programmierung steuert alle Maschinenfunktionen. Eine integrierter Speicher ist für diverse Arbeitsprogramme großzügig dimensioniert. Je nach Wunsch kann mit dieser Vorrichtung ein breites Spektrum von Bearbeitungen, wie Absägen, Wirbeln, Stirnen, Anfasen, Bohren etc. durchgeführt werden. Speziell das Wirbeln mit Endenbearbeitungswerkzeugen erlaubt eine Vielfalt ungeahnter Möglichkeiten.

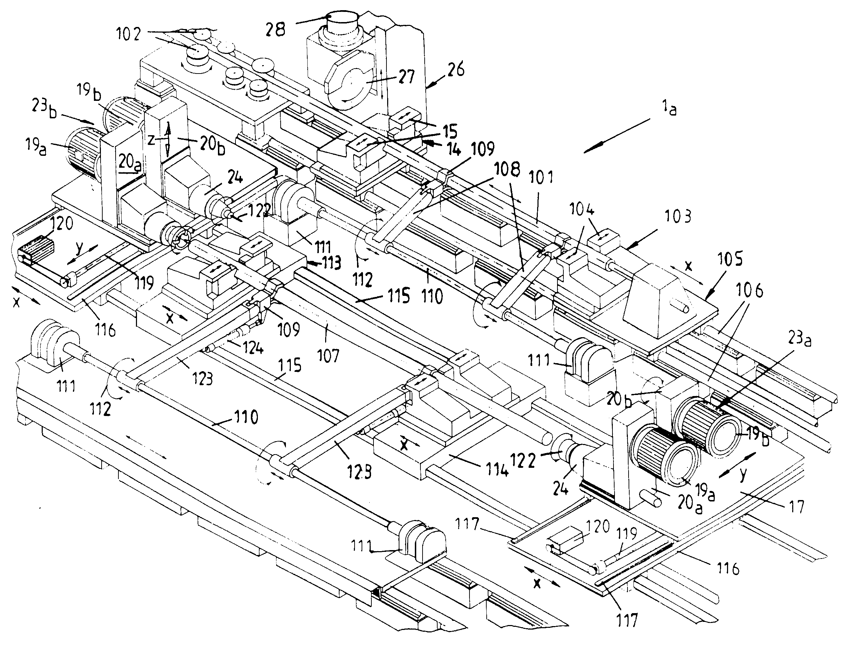

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in der eintigen Figur
Eine erfindungsgemäße Vorrichtung, insbesondere zum Endenbearbeiten von Stangenmaterial, besteht aus einer Bearbeitungsstation 1ₐ.

Im dieser sind einzelne Bearbeitungsschritte voneinander getrennt ausgeführt und insbesondere ein Bearbeitung von beiden Enden einer Stange 101 möglich. Diese Stange 101 wird über angetriebene Treibrollen 102 in die Bearbeitungsstation 1a eingeführt, wobei sie unter einem Sägeblatt 27 einer Sägeeinheit 26 hindurchläuft und auch durch einen Spannstock 14 geführt ist.

Gegenüber den Spannstock 14 ist ein weiterer Spannstock 103 vorgesehen, dessen Spannbacken 104 die Stange 101 klemmend halten können.

Auf den Spannstock folgt eine Indexiereinheit 105, die in Richtung x verfahrbar ist. Hierzu sitzt die Indexiereinheit 105 auf Führungsstangen 106 auf. Durch die Indexiereinheit 105 wird die Länge eines Stangenabschnittes bestimmt, welche dann von der Sägeeinheit 26 von der Stange 101 abgetrennt wird. Nach dem Abtrennen eines Stangenabschnittes 107 wird dieser von Greifern 108 erfaßt, welche ein entsprechendes Zangenmaul 109 aufweisen. Andernends des Zangenmauls 109 sind die Greifer 108 drehfest mit einer Welle 110 verbunden, wobei die Welle in zwei Lagerstellen 111 sitzt. Nicht näher gezeigt ist ein Wellenantrieb, über den die Welle 110 gedreht werden kann, so daß die Greifer 108 in Richtung der Doppelpfeile 112 schwenken. Hierdurch wird der Stangenabschnitt 107 nach dem Öffnen der Spannbacken 104 bzw. 15 aus seiner ersten Bearbeitungsposition geschwenkt und in eine zweite Arbeitungsposition verbracht, wie dies in der Figur ebenfalls angedeutet ist.

In dieser zweiten Bearbeitungsposition wird der Stangenabschnitt 107 von zwei beabstandeten Spannstöcken 113 und 114 gehalten, wobei diese Spannstöcke 113 und 114 an Führungssäulen 115 verfahrbar sind. Das Verfahren kann wiederum in Richtung x geschehen. Der Stangenabschnitt 107 wird so gehaltert, daß seine Enden beidseits den jeweiligen Spannstock 113 bzw. 114 überragen und bearbeitet werden können.

Dieser Bearbeitung dient eine Bearbeitungseinrichtung 23a sowie eine zweite Bearbeitungseinrichtung 23b. Der Einfachheit halber sitzt jede Bearbeitungseinrichtung 23a bzw. 23b ebenfalls den Führungssäulen 115 jeweils jenseits des Spannstockes 113 bzw. 114 auf, wobei ein entsprechender Schlittentisch 116 gleichfalls in Richtung x verfahrbar ist.

Auf dem Schlittentisch 116 befinden sich Führungsschienen 117, welche der Führung eines Quertisches 118 dienen. Das Verfahren eines Kreuzschlitten 17 erfolgt über eine angetriebene Spindel 119, welche eine nicht näher gezeigte Hülse mit Innengewinde an der Unterseite des Quertisches 118 durchsetzt, so daß dieser Quertisch in Richtung des Doppelpfeiles y verfahrbar ist. Der Antrieb der Spindel 119 geschieht mittels eines Motors 120 und eines Antriebsriemens 121.

Auf jedem Kreuzschlitten 17 sind zwei Servomotoren 19a und 19b zu erkennen, welche über entsprechende Getriebeeinheiten 20a und 20b Spannbacken 24 für Werkzeuge 122 antreiben. Mit diesen Werkzeugen kann der Stangenabschnitt 107 gleichzeitig beidends bearbeitet werden.

Es versteht sich von selbst, daß auf einem Kreuzschlitten 17 auch eine Mehrzahl dieser Servomotoren mit einer Mehrzahl von entsprechenden angetriebenen Werkzeugen vorhanden sein kann. Ferner ist auch daran gedacht, eine Mehrzahl von Spannstöcken 113 bzw. 114 nebeneinander anzuordnen, welche jeweils einen Stangenabschnitt halten, wobei diese Mehrzahl von nebeneinanderliegenden Stangenabschnitten dann entsprechend von den Werkzeugen 122 gleichzeitig bearbeitet werden. Hier soll dem Baukastenprinzip der vorliegenden Erfindung keine Grenze gesetzt sein. Auf diese Weise kann die Bearbeitung separater oder aber einer Mehrzahl von Stangenabschnitten gleichzeitig erfolgen. In einem Ausführungsbeispiel in der Praxis waren insgesamt 16 NC-Achsen vorgesehen.

Steuerungsmäßig muß darauf hingewiesen werden, daß jeder Motor und Antrieb frei programmierbar ist. Dies bedeutet eine ganz erhebliche Flexibilität für die Bearbeitung von Stangenenden. Es kann jedem Wunsch eines Kunden Rechnung getragen werden.

In einem nicht näher gezeigten Ausführungsbeispiel ist auf dem Kreuzschlitten noch eine Bearbeitungseinheit vorgesehen, welche ein Werkzeug treibt, das in Hubrichtung Z bewegbar ist. Diese Bearbeitungseinheit übergreift dann den entsprechenden Stangenabschnitt. Beispielsweise können dadurch Querbohrungen in den Stangenabschnitt eingebracht werden.

Bei dieser Bearbeitungseinrichtung 1a dürfte es nur in den seltenen Fällen ratsam sein, wenn bearbeitete Stangenabschnitte 107 wieder von den Greifern 108 erfaßt und über die Treiberrollen 102 zurück zur Be- und Entladestation geführt werden, obwohl diese Möglichkeit auch vom vorliegenden Erfindungsgedanken umfaßt sein soll. Zu einer durchlaufenden Bearbeitung der Stangenabschnitte 107 sind jedoch den Spannstöcken 113 und 114 weitere Greifer 123 zugeordnet, welche ähnlich den Greifern 108 ausgebildet sind. Bei diesen Greifern 123 ist auch jeweils ein Druckmittelzylinder 124 erkennbar, mittels welchem das Zangenmaul 109 betätigt werden kann. Lagerung und Antrieb des Greifers 123 erfolgt in gleicher Weise wie bei den Greifern 108, weshalb auf eine nähere Beschreibung verzichtet wird und für die gleichen Elemente die gleichen Bezugszahlen verwendet werden. Nach einem Schwenken der Greifer 123 nach außen wird dann der bearbeitete Stangenabschnitt 107 auf ein nicht näher gezeigtes Gestell abgelegt.

## Patentansprüche

1. Vorrichtung zum Bearbeiten von beiden Stangenenden einer Stange mittels einer Sägeeinheit (26) sowie zwei jeweils einem Ende der Stange zugeordneten Bearbeitungseinrichtungen (23a, 23b), die auf jeweils einem Schlitten (17) angeordnet und in Richtung auf die Enden der Stange zu verfahrbar sind,
dadurch gekennzeichnet,
daß der Sägeeinheit (26) eine Indexiereinheit (105) zum Bestimmen der Länge eines Stangenabschnittes (107) nachgeordnet und dieser von zumindest einem Spannstock (14 bzw. 103) zwischen Sägeeinheit (26) und Indexiereinheit (105) gehalten ist, wobei dem Stangenabschnitt (107) zumindest ein Greifer (108) zum Entnehmen des Stangenabschnittes (107) aus dem Spannstock (14 bzw. 103) und zum Übergeben des Stangenabschnittes (107) in zumindest einen weiteren Spannstock (113, 114) und diesem wiederum die Bearbeitungseinrichtungen (23a, 23b) zugeordnet sind.

2. Vorrichtung nach Anspruch 1, dadurch gekennzeichnet, daß die Indexiereinheit (105) neben der Bearbeitungseinrichtung (23a) angeordnet ist und bevorzugt auf den gleichen Führungsstangen (106) verschiebbar sitzt wie der Spannstock (14, 103).

3. Vorrichtung nach Anspruch 1 oder 2, dadurch gekennzeichnet, daß die Greifer (108) an einer Welle (110) angeordnet sind.

4. Vorrichtung nach einem der Ansprüche 1 bis 3, dadurch gekennzeichnet, daß die Bearbeitungseinrichtungen (23a, 23b) und die Spannstöcke (113, 114) an denselben Führungssäulen (115) angeordnet sind.

5. Vorrichtung nach wenigstens einem der Ansprüche 1 bis 4, dadurch gekennzeichnet, daß die Bearbeitungseinrichtungen (23a, 23b) jeweils auf einem Schlittentisch (116) aufsitzen und die Bearbeitungseinrichtungen (23a, 23b) in einer Richtung (x) auf das Ende eines Stangenabschnittes (107), senkrecht zu dieser Richtung (x) in Richtung (y) bewegbar und in Richtung (z) anhebbar bzw. absenkbar sind.

6. Vorrichtung nach Anspruch 5, dadurch gekennzeichnet, daß jedem Schlittentisch (116) eine Mehrzahl von Getriebeeinheiten (20a, 20b) zum Antreiben von unterschiedlichen Werkzeugen (122) für die Endenbearbeitung aufsitzen.

7. Vorrichtung nach wenigstens einem der Ansprüche 1 bis 6, dadurch gekennzeichnet, daß den Spannstöcken (113, 114) zumindest ein weiterer Greifer (123) zum Entnehmen eines bearbeiteten Stangenabschnittes (107) zugeordnet ist.

## Claims

1. Apparatus for machining the two bar ends of a bar by means of a saw unit (26) and two machining devices (23a, 23b) which are allocated in each case to one end of the bar, are arranged on a slide (17) in each case and are adapted to travel toward the ends of the bar, characterised in that the saw unit (26) is followed by an indexing unit (105) for determining the length of a bar portion (107) and the bar portion is held between saw unit (26) and indexing unit (105) by at least one vice (14 or 103), the bar portion (107) being allocated at least one gripper (108) for removing the bar portion (107) from the vice (14 or 103) and for transferring the bar portion (107) into at least one further vice (113, 114) and the further vice (113, 114) in turn being allocated the machining devices (23a, 23b).

2. Apparatus according to Claim 1, characterised in that the indexing unit (105) is arranged next to the machining device (23a) and preferably rests displaceably on the same guide rods (106) as the vice (14, 103).

3. Apparatus according to Claim 1 or 2, characterised in that the grippers (108) are arranged on a shaft (110).

4. Apparatus according to one of Claims 1 to 3, characterised in that the machining devices (23a, 23b) and the vices (113, 114) are arranged on the same guide columns (115).

5. Apparatus according to at least one of Claims 1 to 4, characterised in that the machining devices (23a, 23b) rest on a slide table (116) in each case and the machining devices (23a, 23b) are movable in a direction (x) toward the end of a bar portion (107) perpendicularly to this direction (x) in direction (y) and are raisable and lowerable in direction (z).

6. Apparatus according to Claim 5, characterised in that a plurality of gear units (20a, 20b) for driving different tools (122) for machining of the ends rest on each slide table (116).

7. Apparatus according to at least one of Claims 1 to 6, characterised in that the vices (113, 114) are allocated at least one further gripper (123) for removing a machined bar portion (107).

## Revendications

1. Dispositif pour l'usinage des deux extrémités d'une barre au moyen d'une unité de sciage (26) ainsi que de deux systèmes d'usinage (23a, 23b) respectivement associés à une extrémité de la barre, qui sont disposés respectivement sur un chariot (17) et que l'on peut faire avancer en direction des extrémités de la barre, dispositif caractérisé en ce qu'une unité d'indexage (105) est montée en aval de l'unité de sciage (26) pour déterminer la longueur d'une section de barre (107), et en ce que celle-ci est maintenue par au moins un bloc de serrage (14 ou 103) entre l'unité de sciage (26) et l'unité d'indexage (105), un grappin (108) au moins étant associé à la section de barre (107) pour extraire la section de barre (107) de le bloc de serrage (14 ou 103) et pour transférer la section de barre (107) dans au moins un autre bloc de serrage (113, 114), les systèmes d'usinage (23a, 23b) étant associés à leur tour à cet bloc.

2. Dispositif selon la revendication 1, caractérisé en ce que l'unité d'indexage (105) est disposée à côté du système d'usinage (23a) et de préférence repose de façon à pouvoir coulisser sur les mêmes tiges de guidage (106) que le bloc de serrage (14, 103).

3. Dispositif selon la revendication 1 ou 2, caractérisé en ce que les grappins (108) sont disposés sur un arbre (110).

4. Dispositif selon l'une des revendications 1 à 3, caractérisé en ce que les systèmes d'usinage (23a, 23b) et les blocs de serrage (113, 114) sont disposés sur les mêmes colonnes de guidage (115).

5. Dispositif selon l'une au moins des revendications 1 à 4, caractérisé en ce que les systèmes d'usinage (23a, 23b) reposent respectivement sur une table de chariot (116), et en ce que les systèmes d'usinage (23a, 23b) sont mobiles dans une direction (x) sur l'extrémité d'une section de barre (107), perpendiculairement à cette direction (x) dans la direction (y) et peuvent être soulevés ou abaissés dans la direction (z).

6. Dispositif selon la revendication 5, caractérisé en ce qu'une multiplicité d'unités de transmission (20a, 20b) reposent sur chaque table de chariot (116) pour entraîner des outils différents (122) pour l'usinage des extrémités.

7. Dispositif selon l'une au moins des revendications 1 à 6, caractérisé en ce qu'on associe au moins un autre grappin (123) aux blocs de serrage (113, 114) pour retirer une section de barre (107) usinée.
